Europäisches Patentamt

European Patent Office

Office européen des brevets

(19)

(11) Veröffentlichungsnummer: **0 517 175 A1**

# (12) EUROPÄISCHE PATENTANMELDUNG

(21) Anmeldenummer: **92109341.5**

(22) Anmeldetag: **03.06.92**

(51) Int. Cl.5: **C08J 11/06**, B29B 17/00,
//B29K101/10

(30) Priorität: **07.06.91 DE 4118801**

(43) Veröffentlichungstag der Anmeldung:
**09.12.92 Patentblatt 92/50**

(84) Benannte Vertragsstaaten:
**DE ES FR GB IT NL**

(71) Anmelder: **BASF Aktiengesellschaft
Carl-Bosch-Strasse 38
W-6700 Ludwigshafen(DE)**

(72) Erfinder: **Gehring, Heinz, Dr.
Spinozastrasse 30
W-6750 Kaiserslautern(DE)**

(54) **Wiederverwertung von Kunststoff-Altteilen und -Abfällen.**

(57) Die Erfindung betrifft ein Verfahren zur Wiedergewinnung von Kunststoffabfall durch Zerkleinern des Abfalls, Vermischen mit frischem härtbarem Kunststoff und Härten zu Formteilen. Dabei wird der Kunststoffabfall zunächst trocken vorzerkleinert und anschließend in Gegenwart von härtbarem flüssigen Kunstharz oder in einer inerten Flüssigkeit naß vermahlen.

EP 0 517 175 A1

Die Erfindung betrifft ein Verfahren zur Wiederverwertung von zerkleinerten Altteilen und Abfällen von faserverstärkten, vernetzten, duroplastischen Kunststoffen (SMC- und BMC-Teile).

Verstärkte duroplastische Kunststoffe werden in steigendem Maße als Ersatz für Metall und Holz für die Herstellung von Bauteilen in der Automobil-, Elektro- und Haushaltsgeräte-Industrie verwendet. Wegen der begrenzten Lebensdauer der Geräte bereitet die Beseitigung bzw. Verwertung der Kunststoff-Altteile Probleme. Kunststoff-Abfälle fallen bei der Herstellung und Verarbeitung von Fertigteilen als Randbeschnitte oder Ausschußware an. Altteile und Abfälle aus thermoplastischen Kunststoffen können grundsätzlich durch Aufschmelzen aufgeschlossen und wiederverwendet werden; dies ist bei Duroplasten nicht möglich. Derartige Altteile und Abfälle wurden bisher auf Deponien gelagert oder verbrannt, Recycling-Methoden waren kaum bekannt. Die genannten Methoden zur Entsorgung von Kunststoff-Altteilen und -Abfällen sind aber nicht befriedigend.

Bei der Kunststoff-Messe 1989 wurden Versuchsteile aus faserverstärktem ungesättigtem Polyesterharz vorgestellt, die durch Formpressen nach dem BMC-Verfahren hergestellt worden waren und 31 Gew.-% Recyclat enthielten.

In der Europäischen Patentveröffentlichung 407 925 ist eine Recycling-Kunststoffformmasse beschrieben, die 5 bis 80 Gew.-% eines zerkleinerten Kunststoff-Abfalls aus vernetztem, duroplastischem Kunststoff enthält. Die Zerkleinerung wird dabei in zwei Stufen vorgenommen: Erst erfolgt eine Grobzerkleinerung mit Schneidmühlen oder Prallmühlen, dann werden die Grobpartikel in Hammer- und Rotormühlen auf genau definierte Teilchenspektren trocken weiter zerkleinert. Das Mahlgut soll aus länglichen Teilchen mit einer mittleren Länge von maximal 20 mm bestehen und 5 bis 20 Gew.-% Staubanteil mit einer Korngröße von weniger als 0,07 mm sowie mehr als 50 Gew.-% Partikel einer Länge von mehr als 0,5 mm enthalten. Der Trend geht jedoch in Richtung eines feinteiligen Recyclats mit einem hohen Gehalt an staubförmigen Anteilen, die sich insbesondere auf SMC (Sheet-Molding-Compound)-Anlagen gut verarbeiten lassen.

Zu diesem Zweck muß also ein Mahlgut angestrebt werden, das einen möglichst hohen Feinanteil hat. Beim üblichen Trockenmahlen ergibt sich dann aber der Nachteil, daß hoher Energieaufwand erforderlich ist. Ein weiterer Nachteil ist, daß beim Einwiegen und Einmischen dieses Anteiles sehr viel Staub und feinste Fasern in die Umgebung gelangen, was gesundheitlich nicht unbedenklich ist. Es kann also dabei nur im geschlossenen Prozess gearbeitet werden. Weiterhin ist das Trockenmahlen meist mit erheblichem Lärm verbunden.

Der Maschinenverschleiß ist ebenfalls erheblich.

Der Erfindung lag also die Aufgabe zugrunde, ein Verfahren zur Wiederverwertung von Kunststoffabfall zu entwickeln, bei dem die Zerkleinerung des Abfalls ohne die oben genannten Nachteile durchführbar ist.

Erfindungsgemäß wird der Kunststoffabfall zunächst trocken vorzerkleinert und anschließend in Gegenwart von härtbarem, flüssigen Kunstharz oder einer inerten Flüssigkeit auf eine mittlere Teilchengröße unterhalb von 10 mm naß vermahlen.

Als härtbare Kunstharze kommen z.B. in Frage: ungesättigte Polyesterharze, Vinylesterharze, Epoxidharze, Polyurethane, Phenolharze, Harnstoff- und Melaminharze.

Bevorzugt sind ungesättigte Polyesterharze, die im allgemeinen als Lösungen von 80 bis 40 Gew.-% ungesättigter Polyester in 20 bis 60 Gew.-% eines copolymerisierbaren Monomeren vorliegen. Die Polyester sind Kondensationsprodukte aus mehrwertigen, insbesondere zweiwertigen Carbonsäuren und deren veresterbaren Derivaten, insbesondere deren Anhydride, die mit mehrwertigen, insbesondere zweiwertigen Alkoholen esterartig verknüpft sind, und gegebenenfalls zusätzliche Reste einwertiger Carbonsäuren oder einwertiger Alkohole enthalten, wobei zumindest ein Teil der Einsatzstoffe über ethylenisch ungesättigte, copolymerisationsfähige Gruppen verfügen muß. Als copolymerisierbare, ethylenisch ungesättigte monomere Verbindungen kommen die üblichen Allyl- und Vinylverbindungen in Frage, vorzugsweise Styrol.

Das zerkleinerte Kunststoff-Recyclat besteht im wesentlichen aus vernetztem, duroplastischem Kunststoff, Verstärkungsfasern und gegebenenfalls Füllstoffen und weiteren Additiven. Daneben können auch - je nach Herkunft des Altteils - untergeordnete Mengen thermoplastische Kunststoffe, Reste von elastischen Werkstoffen, z.B. Gummi, ferner Holz-, Pappe-, Papier- und Metallpartikel enthalten sein. Im allgemeinen hat das Recyclat folgende Zusammensetzung:

20-80 Gew.-% duroplastischer Kunststoff,

10-40 Gew.-% Fasern, z.B. Glasfasern,

0-70 Gew.-% Füllstoffe, z.B. Kreide.

Die häufigsten Duroplastteile bestehen aus glasfaserverstärkten Polyesterharzen; daneben fallen auch glas- oder kohlenstoff-faserverstärkte Epoxidharze, glasfaserverstärkte Polyurethane und glasfaserverstärkte Phenolharze an.

Diese Altteile werden zunächst mit Schneidmühlen oder Prallmühlen grob vorzerkleinert, wobei wenig Staubanteil anfällt. Die mittleren Abmessungen der trocken zerkleinerten Teilchen liegt im allgemeinen zwischen 10 mm und 100 mm. Sie können längliche oder auch flächige Form haben.

Die erfindungsgemäße Naßvermahlung kann entweder direkt in härtbarem, flüssigen Kunstharz erfolgen oder in einer inerten Flüssigkeit, vorzugsweise in Wasser. Bei der zweiten Variante muß nach dem Vermahlen die Flüssigkeit abgetrennt und das Mahlgut getrocknet werden.

Für die Naßmahlung können grundsätzlich vier Typen schnellaufender Zerkleinerungsmaschinen eingesetzt werden: Zahnkolloidmühle, Zahnringmühle, Korundscheibenmühle und Rührwerkskugelmühle.

Die Zahnkolloidmühle besteht aus einem schnellaufenden, schräggezahnten Rotorkegel, der in einem konusförmigen, ebenfalls gezahnten Statorgehäuse umläuft. Die Zerkleinerung der Partikel erfolgt durch Scherbeanspruchung im Spalt zwischen Rotor und Stator. Durch Veränderung der Spaltweite können Durchsatz und Mahlfeinheit variiert werden.

Bei der Zahnringmühle erfolgt die Zerkleinerung ebenfalls durch Scherbeanspruchung im Spalt zwischen Rotor und Stator. Im Gegensatz zur Zahnkolloidmühle ist hier die Zerkleinerungszone stufenförmig aufgebaut, wobei bis zu drei Stufen hintereinander liegen können. Rotor und Stator sind gezahnt, wobei die Kanäle zwischen den Zähnen in ihrer Tiefe variieren und vorzugsweise im Scherenschnitt zueinander angeordnet sind. Durch die geometrische Ausbildung erfolgt eine Zwangsförderung im Spalt. Bei gleichem spezifischen Energieaufwand (KWh/kg) liefert die Zahnringmühle meist das feinere Endprodukt.

Bei der Korundscheibenmühle arbeitet eine hochtourige bewegte Scheibe gegen eine feststehende. Die Körnung der Scheiben bestimmt den engsten Spalt und damit die Feinheit.

Bei der Rührwerkskugelmühle werden in einem zylindrischen Behälter durch einen schnellaufenden Rührer Stahlkugeln in Umlauf gebracht. Das Mahlgut strömt von unten nach oben durch das Gefäß und wird dabei zwischen den Mahlkörpern durch Druck- und Scherbeanspruchung zerkleinert. Eine Rückhaltevorrichtung am Ausgang verhindert, daß die Mahlkörper mit ausgetragen werden. Die Feinheit des Gutes hängt von der Maschinengeometrie und der Verweilzeit in der Maschine ab (bei gegebener Eingangskörnung).

Die Rührwerkskugelmühle kann in der Regel nur Teilchengrößen von 0,3 mm wirkungsvoll weiterverarbeiten. In der Korundscheibenmühle können Teilchen bis 1 mm eingespeist werden. Bei noch gröberen Teilen in der Materialzufuhr muß mit der Zahnringmühle oder Zahnkolloidmühle gearbeitet werden. Dies kann im kontinuierlichen oder im Chargenbetrieb erfolgen.

Besonders vorteilhaft sind die Zahnringmühlen nicht nur wegen des geringeren spezifischen Energieaufwandes, sondern auch wegen ihrer großen zulässigen Eingangskörnung von bis zu ca. 100 mm je nach Größe der Maschine, ihrer hohen Trockenstoffanteile bis 85 % und ihrer hohen Durchsätze von bis zu 1000 kg/h.

Das Partikelspektrum des erhaltenen Mahlgutes ist in weiten Grenzen den Anforderungen anzupassen. Soll die recyclathaltige Masse auf konventionellen SMC-Anlagen mittels Rakel aufgegeben werden, so empfiehlt sich eine Mahlung auf Partikelgrößen unter 1 mm, was über Maschineneinstellung und Verweilzeit leicht einstellbar ist. Um die Verstärkungswirkung des Mahlgutes zu erhalten und wirtschaftlich (energiesparend) zu arbeiten, mahlt man am besten auf die Partikelgröße herunter, die gerade noch in der anschließenden Verfahrensstufe störungsfrei weiterverarbeitet werden kann. Je nach Art dieser Stufe (BMC- oder SMC-Herstellung nach modernen Techniken) liegt diese verarbeitbare maximale Partikelgröße bei ca. 2 bis 10 mm, wobei die größeren Werte für mehr längliche Teilchen, die kleineren für mehr blättchenförmige Teilchen gelten. Entsprechend den gewählten maximalen Teilchengrößen verschiebt sich auch der untere Bereich des Partikelspektrums. Das heißt, daß bei 10 mm maximaler Teilchengröße der Feinanteil (ca. <0,1 mm) nahezu Null ist, wogegen er bei 2 mm maximaler Teilchengröße bis zu 50 % betragen kann.

Zur Weiterverarbeitung wird das im Frischharz suspendierte bzw. das getrocknete Mahlgut mit weiterem Harz und den üblichen Zusatzstoffen vermischt. Derartige Zusatzstoffe sind insbesondere Initiatoren und inerte Füllstoffe, wie Kreide, Glasfasern, Quarzsand, Kaolin, Aluminiumoxidhydrat, Kieselgel, Metallpulver und Holzmehl. Ferner kann die Formmasse übliche Kunstharz-Additive, wie Beschleuniger, Stabilisatoren, Farbstoffe, Inhibitoren oder Gleitmittel enthalten. Die Mengenverhältnisse sollen dabei so gewählt werden, daß das bei der Härtung entstehende Formteil 10 bis 60 Gew.-% Kunststoffabfall enthält.

Die Ausgangsmaterialien werden dann auf üblichen Mischaggregaten, beispielsweise auf Zweiwellen-Knetern, Walzenpaaren oder in Rührgefäßen vermischt. Je nach Feststoffgehalt entsteht eine trockene sauerkrautartige Masse, die nach dem BMC-Verfahren weiterverarbeitet wird, oder eine pumpfähige Masse, die nach dem SMC-Verfahren weiterverarbeitet wird.

Bei der Weiterverarbeitung nach dem SMC-Verfahren wird die pumpfähige Masse zusammen mit weiterem Kunstharz, Initiator, Füllstoffen, Glasfasern und üblichen Eindickmitteln, z.B. Magnesiumoxid, zu einem eindickfähigen, flächigen Halbzeug (SMC) geformt. Dazu wird vorzugsweise auf eine Trägerfolie erst eine Harzpaste aufgetragen, die härtbares Kunstharz, Initiator, Füllstoffe, Eindickmittel und gegebenenfalls weitere Additive enthält. Dann werden geschnittene Glasfaserrovings aufgestreut und danach wird die pumpfähige Recycling-Kunststofformmasse mittels einer Dosierpumpe gefördert und aus quer zur Produktionsrichtung oszillierenden Öffnungen oder Düsen ausgetragen. Daran kann sich noch einmal der Auftrag von Glasfasern und Harzpaste auf einer Oberfolie ausschließen.

Oft ist es auch vorteilhaft, ohne frische Harzpaste, nur die recyclathaltige Lage mit oder ohne Schnittglaszugabe in dünnen oder dicken Schichten als TMC (Thick Molding Compound) quer zum Band aszillierend aufzutragen und nach Abdeckung mit einer Oberfolie mit mehreren Walzen auszuwalzen, von denen auch einige quer aszillieren können.

Nach einer abschließenden Kalibrierung mittels Kalanderwalzen wird das entstandene flächige SMC-Material in üblicher Weise eingedickt. Das Halbzeug kann - wieder nach bekannten Methoden - zu Formteilen verpreßt und gehärtet werden. Es kann aber auch, besonders wenn es nur aus der recyclathaltigen Lage besteht, mit einseitiger oder zweiseitigen Decklagen eines konventionellen, gegebenenfalls eingefärbten normalen SMC's verpreßt werden, wobei eine Abstimmung der Fließeigenschaften der unterschiedlichen Lagen erforderlich ist.

Die Weiterverarbeitung zu Formteilen nach dem BMC-Verfahren kann auf üblichen Pressen vorgenommen werden. Je nach Art des zugesetzten Härtersystems kann kalt oder heiß (vorzugsweise bei 80 bis 150°C) verpreßt werden, wobei die Masse verformt und gehärtet wird.

Die aus den Recycling-Formmassen hergestellten Teile können mit Vorteil auf solchen Gebieten eingesetzt werden, wo das äußere Bild nur eine untergeordnete Rolle spielt und keine allzu hohen Anforderungen an die mechanischen Eigenschaften gestellt werden. Beispiele dafür sind Eisenbahnschwellen, Paletten, Schachtauskleidungen, Werkzeugschränke, Abdeckungen, Lichtschächte sowie Automobilteile, die nicht sichtbar sind.

**Patentansprüche**

1. Verfahren zur Wiederverwertung von Kunststoffabfall, enthaltend

   20-80 Gew.-% eines vernetzten, duroplastischen Kunststoffs,
   10-40 Gew.-% Fasern und
   0-70 Gew.-% Füllstoff

   durch Zerkleinern, Vermischen mit frischem härtbarem Kunstharz sowie üblichen Zusatzstoffen und Härten des Kunstharzes zu Formteilen, dadurch gekennzeichnet, daß man den Kunststoffabfall zunächst trocken vorzerkleinert und anschließend auf eine mittlere Teilchengröße unterhalb von 10 mm naß vermahlt.

2. Verfahren nach Anspruch 1, dadurch gekennzeichnet, daß die Naßvermahlung in Gegenwart von härtbarem, flüssigen Kunstharz vorgenommen wird.

3. Verfahren nach Anspruch 1, dadurch gekennzeichnet, daß die Naßvermahlung in Gegenwart einer inerten Flüssigkeit, vorzugsweise von Wasser, durchgeführt wird, und daß nach dem Vermahlen die Flüssigkeit abgetrennt und das Mahlgut getrocknet wird.

4. Verfahren nach Anspruch 1, dadurch gekennzeichnet, daß die Mengenverhältnisse so gewählt werden, daß in dem entstandenen Formteil 10 bis 60 Gew.-% Kunststoffabfall enthalten sind.

5. Verfahren zur Herstellung von SMC-Formteilen nach Anspruch 1, dadurch gekennzeichnet, daß man den zerkleinerten Kunststoffabfall mit frischem härtbarem Kunstharz, Initiator, Eindickmittel, Füllstoffen und Glasfasern zu einem flächigen Halbzeug formt, dieses eindickt und bei erhöhten Temperaturen verpreßt und aushärtet.

6. Verfahren zur Herstellung von BMC-Formteilen nach Anspruch 1, dadurch gekennzeichnet, daß man eine teigige Formmasse aus zerkleinertem Kunststoffabfall, frischem härtbarem Kunstharz, Initiator sowie gegebenenfalls Füllstoffen und Glasfasern in Pressen verformt und bei erhöhten Temperaturen härtet.

| | Europäisches Patentamt | **EUROPÄISCHER RECHERCHENBERICHT** | Nummer der Anmeldung |
|---|---|---|---|
| | | | EP 92 10 9341 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-0 407 925 (BASF AKTIENGESSELLSCHAFT)<br>* Ansprüche 1,4-7 *<br>* Spalte 2, Zeile 25 - Zeile 34 *<br>* Spalte 3, Zeile 6 - Zeile 17 *<br>--- | 1,4-6 | C08J11/06<br>B29B17/00<br>//B29K101:10 |
| A | US-A-4 950 692 (LEWIS W.H. ET AL)<br>* Ansprüche 1,6,16,17 *<br>* Spalte 4, Zeile 17 - Zeile 22 *<br>* Spalte 4, Zeile 63 - Zeile 68 *<br>* Spalte 5, Zeile 19 - Zeile 21 *<br>--- | 1-4 | |
| A | EP-A-0 082 295 (THE UP JOHN COMPANY)<br>* Ansprüche 1,6,10 *<br>* Seite 4, Zeile 25 - Seite 5, Zeile 7 *<br>* Beispiel 1 *<br>--- | 1,4 | |
| A | DE-A-3 620 321 (REMAPLAN GMBH)<br>* Ansprüche 1,6-8,11,12 *<br>--- | 1,4 | |
| A | DD-A-125 979 (INSTITUT FÜR SEKUNDÄRROHSTOFFWIRSCHAFT)<br>* Ansprüche 1,2,4,15,16 * | 1,4 | **RECHERCHIERTE SACHGEBIETE (Int. Cl.5)** |
| | ----- | | C08J<br>B29B |

Der vorliegende Recherchenbericht wurde für alle Patentansprüche erstellt

| Recherchenort | Abschlußdatum der Recherche | Prüfer |
|---|---|---|
| DEN HAAG | 29 SEPTEMBER 1992 | NIAOUNAKIS M. |

EPO FORM 1503 03.82 (P0403)